# EUROPEAN PATENT APPLICATION

(11) **EP 1 811 253 A1**
(43) Date of publication of application: **25.07.2007**
(21) Application number: 05781340.4
(22) Date of filing: 01.09.2005
(51) Int. Cl.: F27D 7/02, C22B 1/00, C22B 7/00, F23G 5/027, F23G 5/16, F23G 5/18, F27B 14/14, A61G 12/00

(54) **APPARATUS AND METHOD FOR HEATING TREATMENT**

(30) Priority: 29.09.2004 JP 2004283401
(71) Applicant: Nippon Crucible Co., Ltd., Shibuya-ku, Tokyo 150-0013 (JP)
(72) Inventor: OKADA, TAMIO, C/O NIPPON CRUCIBLE CO., LTD., TOKYO 1500013 (JP); SHIGEMITSU, HIROSHI, C/O NIPPON CRUCIBLE CO., LTD., TOKYO 1500013 (JP); SASAKI, TADAO, C/O NIPPON CRUCIBLE CO., LTD., TOKYO 1500013 (JP); YOSHIKAWA, HIDEO, C/O NIPPON CRUCIBLE CO., LTD., TOKYO 1500013 (JP); SHIRAKAWA, KATSUYUKI, NIPPON CRUCIBLE CO., LTD., TOKYO 1500013 (JP); KISHIDA, RYOUICHI, C/O NIPPON CRUCIBLE CO., LTD., TOKYO 1500013 (JP); TAKEUCHI, SHINNOSUKE, NIPPON CRUCIBLE CO., LTD., TOKYO 1500013 (JP); OSUGA, SHIGERU, C/O NIPPON CRUCIBLE CO., LTD., TOKYO 1500013 (JP); OSAWA, FUMIAKI, C/O NIPPON CRUCIBLE CO., LTD., TOKYO 1500013 (JP)
(74) Representative: Müller-Boré & Partner Patentanwälte
(86) International application number: PCT/JP2005/016022
(87) International publication number: WO 2006/035570

(57) **Abstract**

A heat-treatment apparatus having a combustion chamber (13), an apparatus main body (10) provided with said combustion chamber (13), a combustion burner (20) for supplying a heating gas to said combustion chamber (13), a flue for discharging a combustion gas generated in said combustion chamber (13) to the outside, and a heating vessel stored in said combustion chamber (13), said heating vessel (15) having a bottom and an opening on the top, said opening being opened and closed by a lid (16), and said heating vessel being provided with a communicating member (153) that is communicably open to the above said combustion chamber when said lid is closed. This heat-treatment apparatus can keep the emission gas generated during the treatment, and, waste valuable metals can be efficiently recovered, if contained.

## Description

### TECHNICAL FIELD

The present invention relates to an apparatus and method for a heating treatment. Particularly, the present invention relates to an apparatus and method suitably usable to recover valuable metals, etc., by subjecting waste to a heat treatment.

### BACKGROUND OF THE INVENTION

Combustion equipment having a primary combustion chamber and a secondary combustion chamber is known as equipment for incinerating waste, such as municipal solid waste, and industrial waste. In this double-chambered combustion equipment, waste is burned in the primary combustion chamber and then unburned gases are burned in the secondary combustion chamber using an after burner, so that the waste is completely incinerated.

However, due to recent increases in industrial waste, etc., there is a demand for recovering precious metals, copper, aluminum and like valuable metals with high quality at a high yield. The above-mentioned combustion equipment is not always suitable for such use, because not only unnecessary waste but also such metals are completely oxidized. Patent Document 1 discloses a resource recovery type of heat-treatment apparatus by which only metals can be recovered, without being oxidized, from waste including packing materials, cans' materials, electrical wires, and substrates' materials those formed by laminating polyester and like plastics with aluminum and like metals.

The heat-treatment apparatus of Patent Document 1 is provided with a heat exchanger tube in a heating medium such as hot sands deposited in the pyrolysis furnace, and when polyester/aluminum laminate waste, etc., is supplied in the heat exchanger tube, only plastic components are quickly decomposed by heat under an oxygen-free condition, and then aluminum, etc., is retained in the tube without being oxidized.
[Patent Document 1] Japanese Unexamined Patent Publication No. 1997-323075

### DISCLOSURE OF THE INVENTION

### [Problem to be Solved by the Invention]

However, the heat-treatment apparatus disclosed in Patent Document 1 requires a problematic waste-supply procedure, i.e., the waste has to be cut into pieces in advance, and then placed in the heat exchanger tube in an airtight manner. Furthermore, because heating media, such as sands, are used, it is difficult to accurately control the heating temperature depending on the type of waste, and excellent workability cannot be attained.

An object of the present invention is to solve these problems and provide a heat-treatment apparatus and a heat-treatment method by which the emission gas generated during the treatment can be kept clean and valuable metals, if contained in the waste, can be recovered efficiently.

### [Means for Solving the Problem]

The object of the present invention can be achieved by a heat-treatment apparatus comprising a combustion chamber, an apparatus main body provided with said combustion chamber, a combustion burner for supplying a heating gas to said combustion chamber, a flue for discharging a combustion gas generated in said combustion chamber to the outside thereof, and a heating vessel accommodated in said combustion chamber, said heating vessel having a closed bottom and an opening on top thereof, said opening being openable and closable by a lid, and said heating vessel being provided with a communicating member that is communicably open to an upper portion of said combustion chamber when said lid is closed.

This heat-treatment apparatus enables the waste stored in the heating vessel to be heated under a reduction atmosphere by operating the combustion burner, and therefore valuable metals can be recovered with high quality by being retained in the heating vessel. Because the unburned gases generated in the heating vessel are discharged from the communicating member and then completely burned in the combustion chamber, the exhaust gas can be kept clean.

The heat-treatment method using this heat-treatment apparatus may comprise the steps of, for example, when the waste contains aluminum, copper, zinc and like waste metals together with oils, coating compositions, plastics, rubbers, cloths, paper, woods and like flammable waste, storing said waste metals containing flammable waste in said heating vessel; and melting said waste metals by heating said combustion chamber using said combustion burner while burning unburned gases generated from said flammable waste in said combustion chamber after being discharged via said communicating member.

Examples of waste suitably treated by this heat-treatment method include aluminum beverage cans, oil adhered aluminum chips and waste, sash-material scrap coated by or combined with plastics, etc. The method is particularly effective when the waste metals include metallic injection needles.

When the waste includes electric and/or electronic substrates comprising gold, silver, platinum, etc., or products (personal computers, mobile phones, etc.) comprising such electric and/or electronic substrates, copper wires covered with an organic substance, wiping rags used for wiping silver pastes, etc., the heat-treatment method using the above-described heat-treatment apparatus may comprise the steps of storing waste metals containing flammable waste in said heating vessel; and heating said heating vessel by heating said combustion chamber using said combustion burner in such a manner that said waste metals will not be melted while burning unburned gases generated from the flammable waste in said combustion chamber after being discharged via said communicating member.

When the heat-treatment apparatus further comprises a first supplementary gas-supplying means for supplying combustion air into the heating vessel, the heat-treatment method using this heat-treatment apparatus may comprise the steps of storing food waste, waste plastics, PET bottles, paper, woods, coffee waste and like flammable waste in the heating vessel, and burning said flammable waste in said heating vessel by heating said combustion chamber using said combustion burner while supplying a combustion-enhancing gas from said first supplementary gas-supplying means while burning unburned gases generated from said flammable waste in said combustion chamber after being discharged via said communicating member.

### BRIEF DESCRIPTION OF THE DRAWINGS

Fig. 1 is a plan view of a heat-treatment apparatus according to one embodiment of the present invention.
Fig. 2 is a sectional view of the heat-treatment apparatus of Fig. 1 taken along the plane A-A.
Fig. 3 is a sectional view of the heat-treatment apparatus of Fig. 1 taken along the plane B-B.
Fig. 4 is a sectional view of waste combustion equipment according to another embodiment of the present invention.
Fig. 5 is a sectional view of waste combustion equipment according to another embodiment of the present invention.
Fig. 6 is a sectional view of waste combustion equipment according to another embodiment of the present invention.
Fig. 7 is a sectional view of waste combustion equipment according to another embodiment of the present invention.
Fig. 8 is a sectional view of waste combustion equipment according to another embodiment of the present invention.

### [Explanation of reference numerals]

- 1: heat-treatment apparatus
- 10: apparatus main body
- 13: combustion chamber
- 131: outlet
- 132: inlet
- 14: support
- 141: ventilation member
- 15: heating vessel
- 153: communicating member
- 154: discharging portion
- 251: continuous discharging member
- 252: discharging port
- 255: preheating tower
- 262: heat-resistant camera
- 16: lid
- 17: the first supplementary gas-supplying pipe
- 172: control valve
- 20: combustion burner
- 30: flue
- 31: expanded portion
- 311: baffle plate
- 32: the second supplementary gas-supplying pipe
- 322: control valve
- 40: dust separation equipment
- 50: supporting member

### BEST MODE FOR CARRYING OUT THE INVENTION

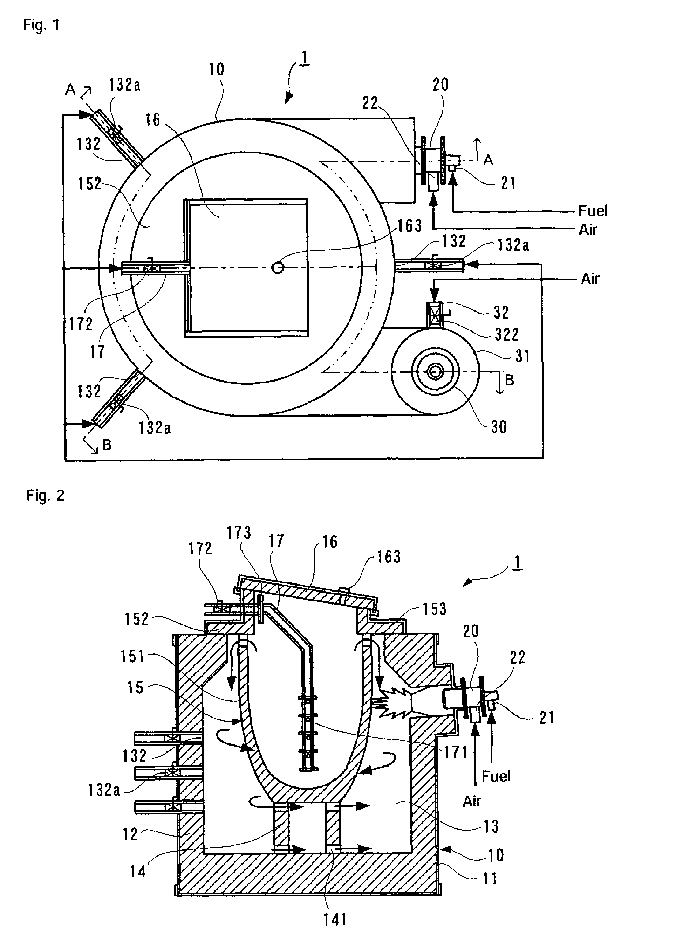

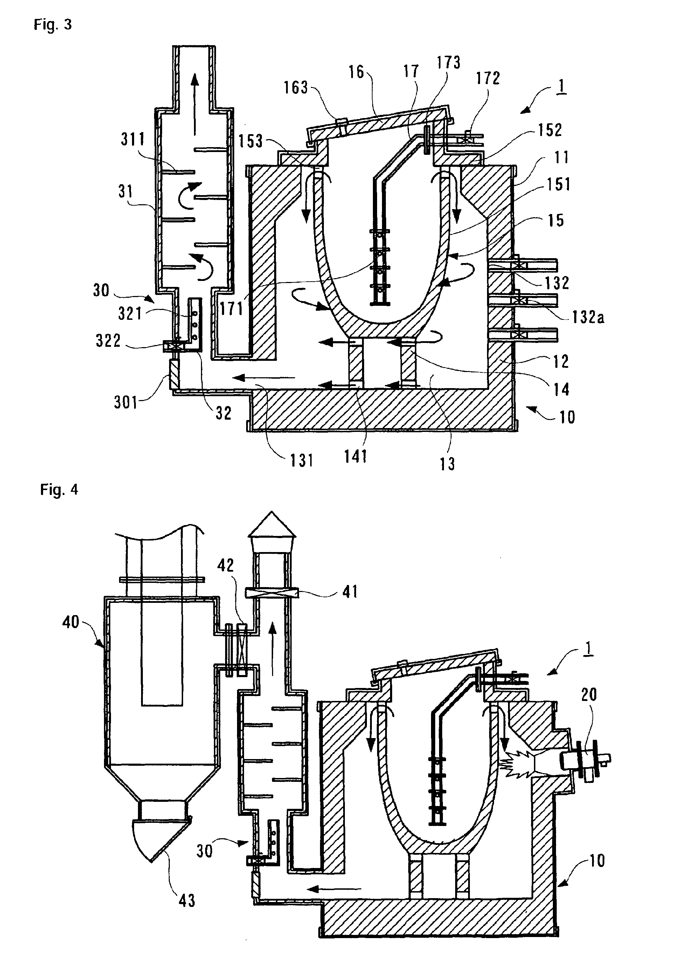

Embodiments of the present invention are illustrated below with reference to the attached drawings. Fig. 1 is a plan view of a heat-treatment apparatus according to one embodiment of the present invention. Figs. 2 and 3 are sectional views of Fig. 1 taken along A-A and B-B respectively.

As shown in Figs. 1 to 3, the heat-treatment apparatus 1 comprises an apparatus main body 10, and a combustion burner 20 and a flue 30 those attached to the apparatus main body 10.

As shown in Figs. 2 and 3, the apparatus main body 10 has a structure wherein an iron casing 11 is lined with a fire-resisting material 12, and the space formed by being surrounded by the fire-resisting material 12 functions as a combustion chamber 13. An outlet 131 is formed in a lower portion of the combustion chamber 13, and a flue 30 is connected to the outlet 131. A support 14 is provided on the floor of the combustion chamber 13, and a heating vessel 15 is mounted on the support 14. Inlets 132 for introducing combustion air from the outside are formed in a sidewall of the combustion chamber 13. In the present embodiment, the inlets 132 are disposed at three locations having a regular interval therebetween along the circumferential direction of the combustion chamber 13 that has a circle shape as seen in a plan view. At each location, upper, middle, and lower inlets 132 are provided, and the flow rate of the air introduced from each inlet 132 can be independently controlled by degree of opening of a valve 132a provided in a pipe that is connected to the inlet 132. In the present embodiment, the inlets 13 are formed substantially in the radial direction of the combustion chamber 13; however, it is also possible to form the inlets 13 in the direction tangential to the combustion chamber 13 in order to easily generate a circulating flow in the combustion chamber 13.

The temperature of the air introduced from the inlet 132 is not limited to room (ordinary) temperature, and the air may be heated in advance by conducting heat exchange with a combustion gas that is discharged from the outlet 131 or other waste gases. The locations and the numbers of the inlets 132 are not limited to those in the present embodiment, and may be suitably selected depending on the necessary volume of the air, etc. If a sufficient amount of air can be introduced from a combustion burner 20, which is described later, the inlets 132 are not necessarily required.

The support 14, which is formed into a tubular shape with a ventilation member 141 in the sidewall thereof, supports the heating vessel 15 by making one end face thereof come into contact with the bottom of the heating vessel 15. In the present embodiment, the ventilation member 141 comprises four grooves formed in both ends of the top and bottom of the support 14 with equal spaces therebetween.

It is preferable that the heating vessel 15 have a closed bottom and an opening on top thereof, and be formed of a material having a high thermal conductivity. In the present embodiment, the heating vessel 15 comprises a container main body 151 formed from a graphite crucible as a main component. Graphite crucibles, which are widely used for crucible furnaces for melting nonferrous metals, contain scaly graphite and silicon carbide as main components. A graphite crucible possesses an excellent thermal conductivity and high resistance to heat and thermal shock, and exhibits excellent durability in a wide range of temperatures, i.e., from very cold to very hot. One or a plurality of grooves are formed in the top portion of the container main body 151, and by making the upper end of the container main body 151 come into contact with the undersurface of a disc-like supporting member 152 via a cushioning material (not shown) such as ceramic fiber, the grooves function as a communicating member 153. The supporting member 152 is fixed to the top surface of the apparatus main body 10, and the upper surface of the portion jetting upward forms an inclined plane. By structuring the heating vessel 15 to have a portion jetting upward from the combustion chamber 13, the capacity of the container can be increased and the efficiency of treating waste can be enhanced.

There is no limitation to the size and numbers of the communicating members 153, but it is preferable that the communicating members 153 be as small as possible and the number thereof be the minimum so that dust or ash generated in the heating vessel 15 will not be discharged. The communicating member 153 may be provided with a filter so as to reliably prevent emission of dust, ash, etc. For example, bulk-like, felt-like, sheet-like, and mesh-like air-permeable members formed of ceramic fiber, etc., can be used as the filters. A baffle plate may be provided in the vicinity of the communicating member 153, if necessary, so that the dust and/or ash in the heating vessel 15 will not be scattered due to combustion gas flow generated in the combustion chamber 13.

It is preferable that the communicating member 153 be formed so as to communicate with the upper portion of the combustion chamber, and the communicating member 153 does not necessarily have to be a groove as in the present embodiment. It is possible to form the communicating member 153, for example, as a through-hole formed in the sidewall of the heating vessel 15. The communicating member 153 may be provided as the space formed between projections provided on the lower surface of the supporting member 152 and made to come into contact with the upper surface of the container main body 151.

The lid 16 is a plate-like component rotatably attached to the top end of the supporting member 152 using a hinge or the like. The opening in the top surface of the heating vessel 15 can be opened or closed by rotating the lid 16. Note that the lid 16 is provided with a safety valve 163 for releasing pressure when the pressure increases to a predetermined level when the heating vessel 15 is closed.

A first supplementary gas-supplying pipe 17, which is connected to a blower or like pressured air-supply source (not shown), is inserted through the supporting member 152. One end of the first supplementary gas-supplying pipe 17 extends into the heating vessel 15. One or a plurality of inlets 171 are provided in the end of the first supplementary gas-supplying pipe 17. By adjusting the degree of opening of the control valve 172 lying somewhere in the first supplementary gas-supplying pipe 17, it is possible to supply combustion air into the heating vessel 15 at a desired flow rate. The first supplementary gas-supplying pipe 17 is detachable from a flange 173, so that it will not be obstructive when not used.

A combustion burner 20 is a known structure provided with a pilot burner for preliminary combustion and a main burner for primary combustion, wherein the combustion intensity and combustion temperature can be controlled by suitably controlling a flow rate (excess air ratio) of the fuel and combustion air supplied via a fuel pipe 21 and combustion air supply pipe 22. The combustion burner 20 is disposed in an upper portion of the combustion chamber 13 but in a lower position than the location of the communicating member 153, and disposed in a direction tangential to the heating vessel 15 and slightly downward from the horizontal direction so that the generated combustion gas can be emitted from the outlet 131 while circulating around the heating vessel 15. The locations of the combustion burner 20 and the outlet 131 are not limited to those of the present embodiment; however, it is preferable that the combustion burner 20 and the outlet 131 be arranged so that the combustion gas supplied from the combustion burner 20 into the combustion chamber 13 is satisfactorily mixed in the combustion chamber 13, and that sufficient combustion time until the combustion gas is emitted from the outlet 131 can be secured. From this point of view, in the present embodiment, the height from the outlet 131 to the combustion burner 20 is made as great as possible and, as shown in Fig. 1, the combustion burner 20 is located in the vicinity of the outlet 131 as seen in a plan view so that the distance from the combustion burner 20 to the outlet 131 in the circular direction can be made the maximum. It is also possible to provide an agitation plate, etc., in the combustion chamber 13, if necessary, to facilitate agitation and mixture of the combustion gas.

The flue 30 is structured so that a pipe horizontally extending from the outlet 131 bents and extends in the perpendicularly upward direction. The flue 30 is provided with an expanded portion 31 having an enlarged cross section. A second supplementary gas-supplying pipe 32 that can supply combustion air from a blower or like pressured air-supply source (not shown) is provided between the outlet 131 and the expanded portion 31 (i.e., the upward of the expanded portion 31). One or a plurality of inlets 321 are provided at the end of the second supplementary gas-supplying pipe 32, and by adjusting the degree of opening of the control valve 322 lying somewhere in the second supplementary gas-supplying pipe 32, it is possible to supply the combustion air into the flue 30 at a desired flow rate. A closed door 301 for use in cleaning is provided at the bended portion of the flue 30.

As shown in Fig. 3, a plurality of baffle plates 311 are provided in the expanded portion 31 along the vertical direction, so that the combustion gas introduced from the outlet 131 and the combustion air introduced from the second supplementary gas-supplying pipe 32 are satisfactorily mixed and agitated in the expanded portion 31, and sufficient residence time can be secured.

The inlet 132 of the combustion chamber 13, the first supplementary gas-supplying pipe 17, the combustion air supply pipe 22 of the combustion burner 20, and the second supplementary gas-supplying pipe 32 are independently connected to a pressured air-supply source, such as a blower. Each of the above-mentioned components may be connected to one of a plurality of pressured air-supply sources or they may be connected to one pressured air-supply source so as to branch out from said source. In the present embodiment, a first blower (not shown) is connected to the combustion air supply pipe 22, and a second blower (not shown) is attached via multipoint connections to the inlets 132, the first supplementary gas-supplying pipe 17 and the second supplementary gas-supplying pipe 32.

In the heat-treatment apparatus having the above-described structure, the waste stored in the heating vessel 15 is heated by supplying a hot combustion gas from the combustion burner to the combustion chamber 13 after placing the waste in the heating vessel 15 and closing the lid 16. Because the opening in the top of the heating vessel 15 is closed with the lid 16, an inside of the heating vessel 15 becomes free from oxygen or attains a low-oxygen state, and therefore the waste in the heating vessel 15 is burned under a reduction atmosphere. In the present embodiment, because a ventilation member 141 is formed in the support 14 supporting the heating vessel 15, the combustion gas comes into contact with not only the sidewalls of the heating vessel 15 but also the bottom surface, so the entire heating vessel 15 can be efficiently heated. By subjecting the waste to reduction combustion using indirect heating in the thus-structured heating vessel 15, when valuable metals are included in the waste, such valuable metals can be efficiently recovered as described later.

The inside of the combustion chamber 13 has a negative pressure when a hot combustion gas moves upward in the flue 30 through the outlet 131, the water vapor and unburned gases of organic substances, etc., generated from the waste by heating the heating vessel 15 are delivered from the communicating member 153 to the combustion chamber 13. Such unburned gases are burned after being mixed with a combustion gas in the combustion chamber 13, and then discharged from the flue 30. In the present embodiment, the combustion burner 20 is disposed in a higher position than the outlet 131, and the combustion gas emitted from the combustion burner 20 circulates along the wall of the combustion chamber 13, and therefore the unburned gases can be satisfactorily agitated in the combustion chamber 13 and sufficient time for burning the unburned gases in the combustion chamber 13 can be reliably secured. As a result, complete combustion of the unburned gases in the combustion chamber 13 can be facilitated, the exhaust gas emitted from the flue 30 can be made clean, and emission of smoke, unpleasant odors, ash, etc., can be prevented.

In the present embodiment, because combustion air can be introduced into the combustion chamber 13 from the inlet 132, if the volume of the air supplied from the combustion burner 20 to the combustion chamber 13 is insufficient, this shortage can be supplemented so that complete combustion in the combustion chamber 13 can be secured.

Furthermore, because combustion air can be supplied from the second supplementary gas-supplying pipe 32 to the flue 30 in the present embodiment, if unburned gases are contained in the exhaust gas passing through the flue 30, they can be completely burned in the flue 30. This reliably keeps the exhaust gasses clean.

The temperature of the combustion gas supplied from the combustion burner 20 is preferably not lower than 800°C, and more preferably not lower than 850°C, from the viewpoint of facilitating complete combustion of unburned gases, dioxins, etc. The upper limit of the combustion temperature can be selected depending on the heat resistance of the material used, etc., but, for example, if a graphite crucible is used as in the present embodiment, the temperature of the combustion gas may be very high, such as about 1500°C.

When the heating vessel 15 is satisfactorily heated and unburned gases are continuously supplied from the heating vessel 15 to the combustion chamber 13, the combustion rate of the combustion burner 20 can be reduced. For example, it is possible to operate only a pilot burner without operating the main burner of the combustion burner 20, or only air of standard (ordinary) temperature may be supplied from the combustion burner 20 while stopping the fuel supply to the combustion burner 20. In this case, it is possible to control the degree of opening of the valve 132a in the inlet 132 so that the air-fuel ratio in the combustion chamber 13 becomes optimal. In particular, when the waste contains PET resin, vinyl chloride resin and like materials having a high calorific value, or small pieces of wood and like biomass, or when the proportion of combustible materials in the waste is intentionally increased, a large amount of self-combustion heat can be obtained. This enables to reduce fuel consumption by the combustion burner 20 by thermal recycle (i.e., recycling of heat within the system), and the hot exhaust gas emitted from the flue 30 can be effectively used in a boiler, dryer, etc. As described above, the heat-treatment apparatus of the present embodiment makes it possible to recover valuable metals from waste and effectively collect combustion heat from flammable waste, and therefore the heat-treatment apparatus of the present embodiment is applicable in various fields due to its ability to generate thermal energy.

The temperature of the combustion chamber 13 can be suitably selected by adjusting the combustion rate or the excess air ratio by turning on or off the main burner and the pilot burner of the combustion burner 20, and controlling the degree of opening of the valve 132a of the inlet 132, etc., while monitoring with a temperature sensor (not shown), etc.

In the heat-treatment apparatus of the present embodiment, by making the inside of the heating vessel 15 a reduction atmosphere, flammable organic materials contained in the waste can be carbonized. It is also possible to incinerate the waste by gradually oxidizing in the heating vessel 15 by raising the excess air ratio in the combustion burner 20 or increasing the amount of the air introduced from the inlet 132. Furthermore, the structure of the present embodiment allows combustion air to be supplied to the heating vessel 15 via the first supplementary gas-supplying pipe 17, and therefore the inside of the heating vessel 15 can be smoothly made an oxidized atmosphere by controlling the degree of opening the control valve 172. As described above, the flammable waste in the heating vessel 15 may be suitably carbonized or incinerated depending on the type of the waste and the purpose of the treatment, etc.

In the present embodiment, combustion air can be supplied from the inlet 132 of the combustion chamber 13; however, complete combustion in the combustion chamber 13 may be facilitated by supplying oxygen or other combustion-enhancing gases from the inlet 132. For example, when oxygen is introduced as a combustion-enhancing gas, kitchen garbage, medical waste and like flammable waste, which are easily carbonized, can be reliably incinerated.

The present embodiment has a structure wherein combustion air can be supplied from the first supplementary gas-supplying pipe 17 into the heating vessel 15; however, it is also possible to employ other structures wherein a gas other than air is supplied from the first supplementary gas-supplying pipe 17 into the heating vessel 15. For example, oxygen or like combustion-enhancing gas may be supplied to aggressively promote combustion in the heating vessel 15. Alternatively, it is also possible to prevent generation of unnecessary oxides in the heating vessel 15 by supplying nitrogen, argon or like inert gas from the first supplementary gas-supplying pipe 17 to the heating vessel 15.

A method in which waste is heat-treated using the heat-treatment apparatus having the above-mentioned structure is explained in detail below. For example, when waste containing aluminum, copper, zinc and like nonferrous metals together with oils, organic coating materials, plastics, rubber, clothes, paper, woods and like flammable materials are heat-treated, waste metals can be recovered as valuable metals after being melted using a heat-treatment apparatus of the present embodiment.

First, waste metals containing flammable waste as described above are placed in the heating vessel 15, and a combustion chamber 13 is then heated using a combustion burner 20. The temperature in the combustion chamber 13 may be suitably selected in such a manner that the waste metals are melted in the heating vessel 15, considering the melting points of the waste metals. For example, if the waste metals consist of aluminum materials such as aluminum cans, aluminum chips, etc., the temperature of the combustion chamber 13 may be about 900°C.

It is preferable that the inside of the heating vessel 15 be heated under a reduction atmosphere. In other words, it is preferable that the excess air ratio of the combustion burner 20 be set in a normal range (for example, about 1.1 to 1.3) and the control valve 172 of the first supplementary gas-supplying pipe 17 be closed. It is also possible to place materials, such as coconut shells, plastics which can accelerate carbonization in the heating vessel 15, if necessary, to intensify the reduction atmosphere. As described above, by melting waste metals in a reduction atmosphere, oxidation of the molten metal can be prevented and therefore the metal can be recovered as a valuable metal easily. If oxidation is not a particular problem depending on the type of the metal, it is also possible to promote oxidation combustion in the heating vessel 15 by letting in air from the first supplementary gas-supplying pipe 17 into the heating vessel 15.

Once melting of the waste metals in the heating vessel 15 has started, an inert gas such as nitrogen, and argon may be supplied from the first supplementary gas-supplying pipe 17. This prevents generation of slag, etc., in the heating vessel 15, and improves the quality of molten metal and the yield.

An unburned gas generated from the flammable waste in the heating vessel 15 is delivered to the combustion chamber 13 via communicating member 153, mixed with the circulating flow of the combustion gas supplied from the combustion burner 20 and combustion air introduced, if necessary, from the inlet 132. The mixture of gases is burned in the combustion chamber 13, and then discharged to the outside from the outlet 131 via the flue 30.

As an Example of such a heat-treatment method, a heat treatment was conducted in such a manner that about 20 kg of waste comprising scrap of aluminum beverage cans, return scrap from aluminum die casting, and aluminum chips to which a large amount of oil and water were adhered, was placed in a heating vessel 1-5; a combustion burner 20 was operated; and air was introduced from the inlet 132. The temperature in the combustion chamber 13 was set to 900°C and the heating time was one hour. The exhaust gas emitted from a flue 30 during the heat treatment was clean, and emission of smoke, unpleasant odors, ash, etc., was not observed. After completion of the heat-treatment, the inside of the heating vessel 15 was observed and molten aluminum was found remaining on the bottom surface. On the surface of the molten aluminum, a slight amount of slag comprising aluminum oxides as main components remained. Subsequently, the slag was removed by subjecting the thus-obtained residue to a standard flux treatment and then cooled, obtaining an aluminum ingot.

In a heat treatment using a known furnace for melting nonferrous metals, such as a crucible furnace and a direct-heated brick furnace, materials are directly exposed to air. This generates a significant loss of molten aluminum due to oxidation, and therefore it is difficult to recover high quality aluminum ingot at a high yield by using a known furnace. Furthermore, if oils, coating materials, plastics and like flammable materials are adhered to the aluminum material, because a large amount of black smoke, unpleasant odors, toxic substances are generated, actual combustion itself is difficult using a known furnace. In contrast, the heat-treatment apparatus of the present embodiment makes it possible to recover high quality aluminum ingot at a high yield completely free from smoke, unpleasant odors, etc., even if oils or other substances are adhered to the aluminum material. Therefore, the heat-treatment apparatus of the present embodiment can be used as a new type of melting furnace by which special care does not have to be paid to any soiling of waste metals.

In another Example, a heat treatment was conducted in such a manner that injection needles with plastic or rubber components, plastic containers for intravenous drip, gauze, absorbent cottons, bandages and like medical waste was placed in a heating vessel 15 together with a little amount of aluminum beverage cans, aluminum scraps and like aluminum materials, a combustion burner 20 was turned on, and air was then introduced from an inlet 132. The temperature in the combustion chamber 13 was set at 1000°C, and the heating time was one hour. In this heat treatment, leaving a control valve 172 open, air was supplied from a first supplementary gas-supplying pipe 17 to the heating vessel 15.

Also in this heat treatment, the exhaust gas emitted from the flue 30 was clean and completely free from smoke, unpleasant odors, ash, etc. After completion of the heat treatment, aluminum cans and scraps as well as injection needles were retained in a molten condition on the bottom of the heating vessel 15, and, other than these, only white ash was retained. Aluminum ingots that contain injection needles can be effectively utilized, for example, as an aluminum material usable as a deoxidant in steel purification processes.

By using the heat-treatment apparatus of the present embodiment, even if the waste contains substances difficult to handle, such as disposed injection needles, these substances can be detoxified and recovered as valuable material.

In the above, a method wherein waste metals are recovered after being melted is explained; however, valuable metals can be separated from other waste and recovered without melting the waste metals depending on the type of waste. In other words, heat treatment may be conducted in such a manner that the waste metals containing flammable waste are placed in the heating vessel 15, the combustion chamber 13 is heated using the combustion burner 20 while keeping the waste metals in solid form, and, if necessary, combustion air is introduced from the inlet 132 to ensure combustion is conducted completely. Examples of waste to which such a heat treatment is preferable include disposed electric or electronic substrates comprising gold, silver, platinum and like precious metals, or personal computers, portable phones, etc., comprising such substrates; copper wires covered with an organic cover; disposed wiping rags to which silver pastes are adhered; etc. Also in this case, it is preferable that the inside of the heating vessel 15 be heated under a reduction atmosphere; however, if necessary, air may be supplied from the first supplementary gas-supplying pipe 17. It is preferable that control of the fuel flow rate of the combustion burner 20, the excess air ratio, and the amount of the air introduced from the inlet 131 be selected so that unburned gases generated in the heating vessel 15 can be burned in the combustion chamber 13 while maintaining a temperature in the heating vessel 15 lower than the melting points of the waste metals.

As an Example of this heat-treatment method, about 20 kg of copper wires having an organic cover were placed in the heating vessel 15, and heat treatment was conducted using the heat-treatment apparatus of the present embodiment. The temperature of the combustion chamber 13 was set at 900°C, and the heating time was selected to be one hour. The exhaust gas emitted from the flue 30 during the heat treatment was clean and completely free from smoke, unpleasant odors, ash, etc. The inside of the heating vessel 15 was observed after the completion of heat treatment and found that the cover of the copper wires was almost carbonized with only a little portion adhered to the copper wires but easily removal, and uncovered copper wires were retained in their original linear shape without melting.

The heat-treatment apparatus of the present embodiment can be suitably used not only to treat waste metals as described above but also as combustion equipment for handling general flammable waste. Examples of flammable waste include coffee waste, tea waste, sweet potatoes used for making clear liquor (liquor distilled from sweet potatoes), residues from soy sauce, foods and like kitchen garbage; PET bottles, plastic bags, plastic sheets and like resin products; rubber products; disposed fishing nets; wood chips; waste wood materials; rice hulls; tomato stalks; paper; corrugated cardboard; organic coating materials; waste oils; etc.

After storing such flammable waste in the heating vessel 15, the control valve 172 was kept open while heating so as to introduce air from the first supplementary gas-supplying pipe 17 into the heating vessel 15, some portion of the flammable waste was burned in the heating vessel 15. The unburned gases not burned in the heating vessel 15 were delivered into the combustion chamber 13 via the communicating member 153, mixed with the circulating flow of the combustion gas from the combustion burner 20 and combustion air supplied from the inlet 132, and then emitted from the outlet 131 via the flue 30 after being burned in the chamber 13. As described above, flammable waste can be burned both in the heating vessel 15 and in the combustion chamber 13 to increase the combustion efficiency and the exhaust gas from the flue 30 can be kept clean. In this case, the amount of fuel supplied to the combustion burner 20 can be reduced due to self-combustion of the flammable waste, and, depending on the type of the flammable waste, combustion may be continued by thermal recycle, even if only air without fuel is supplied to the combustion burner 20. The combustion gas discharged from the flue 30 can be used as thermal energy.

As an Example of this heat-treatment method, combustion was actually conducted by placing general waste containing coffee grounds, PET bottles, plastic lunch boxes, together with steel cans or like incombustible waste in the heating vessel 15. The temperature in the combustion chamber 13 was set at 1100°C, and the heating time was one hour. The exhaust gas emitted from the flue 30 during the heat treatment was clean and completely free from smoke, unpleasant odors, ash, etc. The inside of the heating vessel 15 was observed after completion of the heat treatment and only steel cans from which combustible materials were completely removed and white ash as residues were found.

Embodiments of the present invention are described above in detail; however, the embodiments of the present invention are not limited to these. For example, in the present embodiment, the container main body 151 is formed from a graphite crucible; however, a container main body 151 may be an iron container, which is inexpensive and has a high thermal conductivity, may be used when zinc, low-melting point aluminum alloys, or other low-melting point waste metal is melted or when waste metal is separated and recovered without melting. In addition, containers formed of fire-resistant ceramics or metals other than iron can also be used as the container main body 151.

In the above embodiments, the heating vessel 15 comprises a container main body 151 and a supporting member 152, wherein the supporting member 152 projects upward from the combustion chamber 13 so that the volume of the heating vessel 15 is maximized; however, it is also possible to use the lid 16 to close both the combustion chamber 13 and the heating vessel 15 without providing the supporting member 152.

As shown in Fig. 4, the heat-treatment apparatus 1 of the present embodiment may be structured in such a manner that dust separation equipment 40, such as a known cyclone-type apparatus, for separating dust or ash contained in a gas by centrifugation, etc., is connected to the flue 30, and the exhaust gas passing through the flue 30 is emitted outside via the dust separation equipment 40 by opening and closing channel switching valves 41 and 42. In Fig. 4, the same reference numerals are provided to the components having the same structure as that in Figs. 1 to 3 (this is also true to the following drawings).

As described above, the heat-treatment apparatus of the present invention allows flammable waste to be completely incinerated in the combustion chamber 13, and therefore the risk of an exhaust gas containing ash being emitted outside is very little even without dust separation equipment 40 being provided; however, by providing the dust separation equipment 40, ash can be separated and reliably prevented from being discharged outside even if a small amount of ash is contained in the exhaust gas delivered to the flue 30. Note that the separated ash can be recovered by keeping a closing plate 43 open.

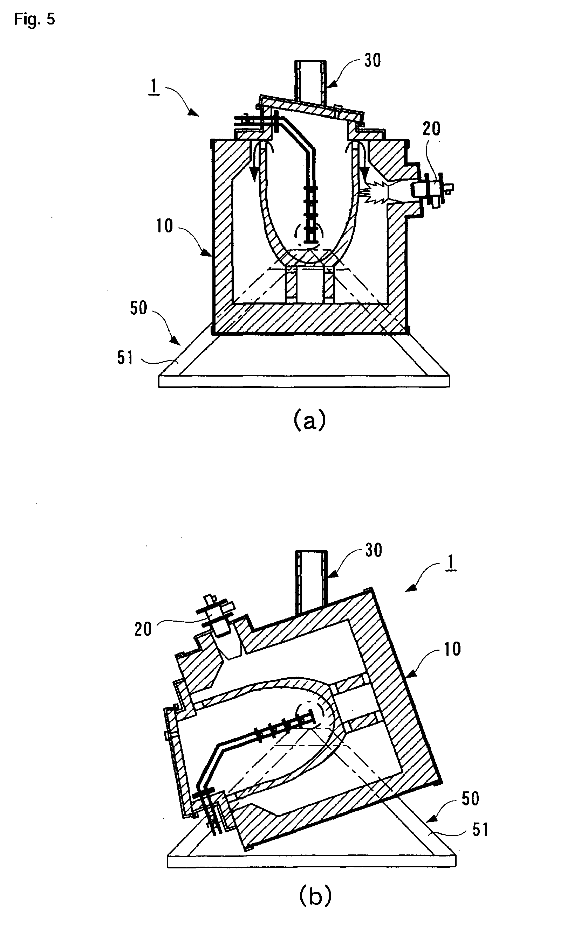

It is also possible to structure the apparatus main body 10 of the heat-treatment apparatus 1 in the above-described embodiment so as to be inclinable by means of a supporting member 50 as shown in Fig. 5(a).

The supporting member 50 comprises a pair of triangle supporting frames 51 (only one of a pair is shown in the drawings), the body section of the apparatus main body 10 is rotatably supported on the apex portion of each supporting frame 51. A tilting handle (not shown) is connected to one of the rotation axis that supports the apparatus main body 10. The portion connecting the apparatus main body 10 to the flue 30 is structured so that only the apparatus main body 10 rotates while the flue 30 remains in its original position by releasing a locking mechanism (not shown).

In this structure, when valuable metals, etc., retained in the heating vessel 15 are recovered after completion of heat treatment, the apparatus main body 10 can be tilted as shown in Fig. 5(b) by operating a handle (not shown), and therefore recovery of the residues in the heating vessel 15 can be conducted easily. In particular, when waste metal is separated and recovered after melting, because the metal can be readily removed in a molten condition immediately after completion of the heat treatment by tilting the apparatus main body 10, throughput and operation efficiency can be improved.

The means to tilt the apparatus main body 10 may be a manual type, such as operation of a handle as in the present embodiment, or a hydraulic cylinder and like automatic means. It is also possible to employ a structure wherein a spout is provided to the opening of the heating vessel 15 to ease collection of the residues retained in the heating vessel 15.

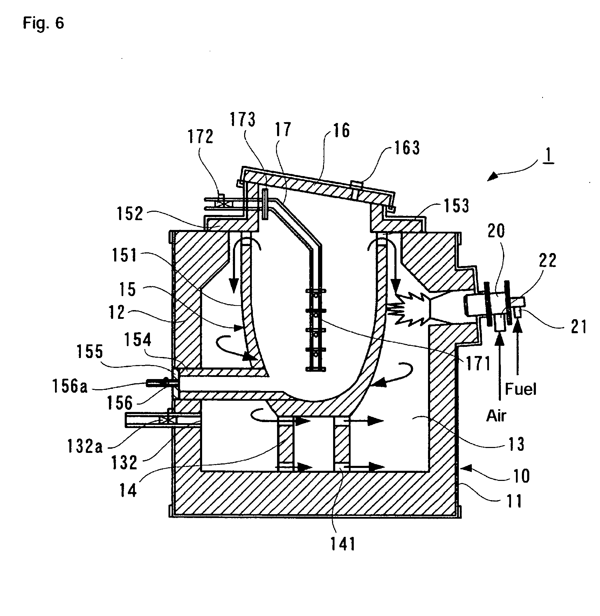

It is also possible to employ the structure shown in Fig. 6, wherein a discharging portion 154, that enables the apparatus main body 10 to communicate with the outside via the sidewall of the combustion chamber 13, is provided in a lower portion of the container main body 151 of the heating vessel 15, and the discharging portion 154 is opened and closed by a closing lid 155.

In this structure, by leaving the closing lid 155 open after completion of the heat treatment, residues remained in the heating vessel 15 can be scraped out from the discharging portion 154 without tilting the apparatus main body 10, and therefore the efficiency of treating waste can be enhanced. In particular, if the waste mainly comprises coffee waste, infectious medical waste and like flammable waste, this method is very effective because the residues in the heating vessel 15 can be incinerated completely by employing the above-described heat treatment and readily removed via the discharging portion 154. Furthermore, if the metals contained in the waste is heat-treated without melting, the residues in the heating vessel 15 can be readily removed via the discharging portion 154.

It is also possible to employ a structure as shown in Fig. 6, wherein an inlet 156 with a valve 156a is provided in the closing lid 155 of the discharging portion 154, and outside air is introduced into the heating vessel 15 via the inlet 156 by making the inside of the heating vessel 15 have a negative pressure during heat treatment. This structure promotes oxidation combustion of flammable materials contained in the waste, and complete incineration of flammable waste can be conducted more easily.

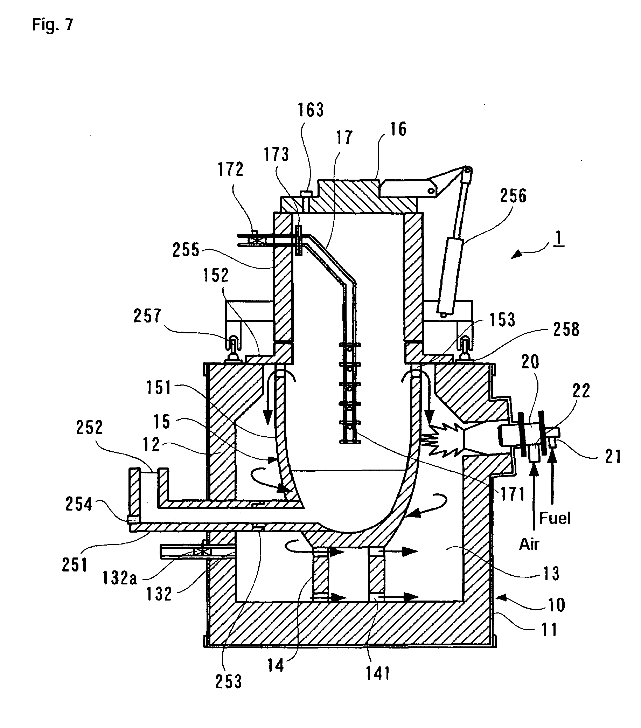

The heat-treatment apparatus may be structured so as to comprise, instead of the discharging portion 154 shown in Fig. 6, a continuous discharging member 251 comprising a pipe extending from a lower portion of the heating vessel 15 in the horizontal direction and bending upward in the perpendicular direction outside of the apparatus main body 10 as shown in Fig. 7. This structure is particularly suitable for treating waste containing waste metals, because the inside of the continuous discharging member 251 can always be filled with a molten metal during the waste metals treatment, and a molten metal can be supplied continuously form the discharging port 252 without the inside of the heating vessel 15 coming into contact with outside air.

In the structure shown in Fig. 7, the continuous discharging member 251 is detachably disposed in the interconnecting portion 253 so as to ease maintenance. Furthermore, a tap 254 is provided in the portion where the continuous discharging member 251 exits from the apparatus main body 10, and by leaving the tap 254 open, the molten metal in the continuous discharging member 251 can be discharged (released). Note that any molten metal remaining on the bottom of the heating vessel 15 after discharging the molten metal from the tap 254 can be easily removed by dipping the top of a rod formed of aluminum or like metal in the retained molten metal, and removing the rod after the molten metal has cooled and solidified.

In such continuous waste treatment, it is preferable that the heat-treatment apparatus be structured so that a large volume of waste can be accommodated in the heating vessel 15 to reduce the number of inputs of waste. Therefore, in the structure shown in Fig. 7, the upper surface of the supporting member 152 shown in Fig. 1 is horizontal, and a cylindrical preheating tower 255 that can be fixed on top of the supporting member 152 is provided.

The upper end of the preheating tower 255 is covered with a lid 16, and the lid 16 can be opened and closed by a driving mechanism 256 driven by a hydraulic cylinder. The preheating tower 255 is provided with a roller 257 in a lower portion thereof and is movable along a rail 258 that is disposed along the upper surface of the apparatus main body 10 in the direction perpendicular to the surface of the drawing. The preheating tower 255 can be closely fixed to the apparatus main body 10 using a fixing means (not shown) by moving it above the supporting member 152.

By attaching the preheating tower 255 to the apparatus main body 10 in a closed and movable manner, the preheating tower 255 can be retracted from above the supporting member 152 so that impurities floating on the molten metal liquid surface in the heating vessel 15 can be easily removed. This structure is particularly effective in a continuous operation.

There is no limitation to the discharging port 252 as long as it opens upward (including an oblique upward direction) in a higher position than the location where the continuous discharging member 251 is attached to the heating vessel 15. The discharging port 252 may be structured so as to, for example, extend in an oblique downward direction from the heating vessel 15 and bend upward outside of the apparatus main body 10. In this case, it is preferable that the tap 254 be provided on the lowermost portion of the continuous discharging member 251, which exits from the apparatus main body 10. Alternatively, it is also possible to form the continuous discharging member 251 from a straight pipe extending in an oblique upward direction from the heating vessel 15.

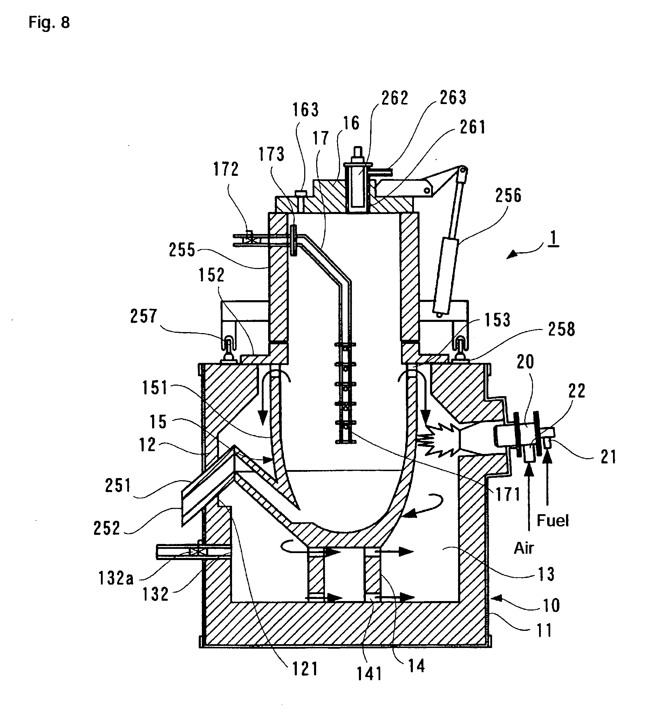

It is also possible to provide a heat-resistant camera in the combustion chamber 13 so that the combustion condition can be visually observed. As shown in Fig. 8, the lid 16 is provided with an observation tube 261 that makes the inside and outside of the heating vessel 15 communicable, and a heat-resistant camera 262 is mounted on the observation tube 261 using a screw inserted from the upper part of the observation tube 261. The heat-resistant camera 262 is, for example, a CCD camera that can take images of the inside of the heating vessel 15. Oxygen, air or like combustion-enhancing gas, or an inert gas can be introduced into the observation tube 261 via a third supplementary air supply pipe 263. The introduced gas passes through between the inside wall of the observation tube 261 and the heat-resistant camera 262 and is then supplied in the heating vessel 15. In Fig. 8, the same reference numerals are provided to the components having the same structure as that in Fig. 7.

In this structure, due to the introduction of a gas from the third supplementary air supply pipe 263, a tubular air curtain appears in the imaging direction of the heat-resistant camera 262. This prevents the lens of the heat-resistant camera 262 from becoming fogged or soiled, and therefore the conditions in the heating vessel 15 including the amount of waste remaining, melting conditions, generation of gases, etc., can be reliably checked. If the heat-resistant camera 262 is not used, a heat-resistant glass lid or the like may be provided to the observation tube 261 so that the inside of the heating vessel 15 can be visually observed directly.

As shown in Fig. 8, the continuous discharging member 251 may comprise a storage portion 251a extending from a lower portion of the heating vessel 15 to an upper portion, and a discharging portion 251b downwardly extending from the storage portion 251a to the outside of the apparatus main body 10. This structure allows all molten metal to remain in the apparatus main body 10, after being continuously supplied from the discharging port 252 and retained in the continuous discharging member 251, and therefore cooling of the molten metal can be prevented. It is preferable that a notch 121 be formed on an inner side of the wall of the apparatus main body 10 in the portion where the discharging portion 251b passes through, so that the discharging portion 251b can be effectively heated by combustion gas in the apparatus main body 10.

### INDUSTRIAL APPLICABILITY

The present invention provides a heat-treatment apparatus and a heat-treatment method by which an exhaust gas generated during the treatment can be kept clean, and valuable metals, if contained in the waste, can be effectively recovered.

## Claims

1. A heat-treatment apparatus comprising:
a combustion chamber;
an apparatus main body provided with said combustion chamber;
a combustion burner for supplying a heating gas to said combustion chamber;
a flue for discharging a combustion gas generated in said combustion chamber to the outside thereof; and
a heating vessel accommodated in said combustion chamber,
said heating vessel having a closed bottom and an opening on the top, said opening being openable and closable by a lid, and said heating vessel being provided with a communicating member that is communicably open to an upper portion of said combustion chamber when said lid is closed.

2. A heat-treatment apparatus according to claim 1, wherein said combustion chamber comprises an inlet for introducing a combustion-enhancing gas from the outside thereof.

3. A heat-treatment apparatus according to claim 1 or 2, wherein said flue is connected to an outlet formed in the lower portion of said combustion chamber, and said combustion burner is disposed in a higher position than said outlet.

4. A heat-treatment apparatus according to any one of claims 1 to 3, which further comprises a first supplementary gas-supplying means for supplying a gas into said heating vessel.

5. A heat-treatment apparatus according to claim 4, which further comprises a control valve for controlling a supply of gas using said first supplementary gas-supplying means.

6. A heat-treatment apparatus according to any one of claims 1 to 5, which further comprises a second supplementary gas-supplying means for supplying a combustion-enhancing gas into said flue.

7. A heat-treatment apparatus according to claim 6, wherein said flue has a channel and an expanded portion having an enlarged cross section in a portion of the channel; with at least one baffle plate being disposed in said expanded portion; and with said second supplementary gas-supplying means for introducing a combustion-enhancing gas to a position further upstream than said expanded portion.

8. A heat-treatment apparatus according to any one of claims 1 to 7, which further comprises a support for supporting said heating vessel;
said support being formed into a tubular shape with one end thereof being in contact with the bottom surface of said heating vessel, and a plurality of ventilation members being formed in a sidewall thereof.

9. A heat-treatment apparatus according to any one of claims 1 to 7, wherein said heating vessel projects upward from said combustion chamber, and said communicating member is formed in a sidewall thereof.

10. A heat-treatment apparatus according to any one of claims 1 to 9, wherein said communicating member is provided with a filter.

11. A heat-treatment apparatus according to any one of claims 1 to 10, wherein said heating vessel includes a graphite crucible.

12. A heat-treatment apparatus according to any one of claims 1 to 10, wherein said heating vessel includes an iron container.

13. A heat-treatment apparatus according to any one of claims 1 to 12, which further comprises dust separation equipment connected to said flue.

14. A heat-treatment apparatus according to any one of claims 1 to 12, which further comprises a supporting means for supporting said apparatus main body in an inclinable manner.

15. A heat-treatment apparatus according to any one of claims 1 to 14, wherein said heating vessel further comprises a discharging channel, a lower portion of which communicates with the outside of said apparatus main body via a sidewall of said combustion chamber, and said discharging channel being sealable by a closing lid.

16. A heat-treatment apparatus according to any one of claims 1 to 14, which further comprises a continuous discharging member that is disposed in a lower portion of said heating vessel, said continuous discharging member communicating with the outside of said apparatus main body via a sidewall of said combustion chamber, and being provided with a discharging port on one end thereof,
said discharging port opening upward at a location that is higher than the location wherein said continuous discharging member is connected to said heating vessel.

17. A heat-treatment apparatus according to any one of claims 1 to 14, which further comprises a continuous discharging member that is disposed in a lower portion of said heating vessel, said continuous discharging member communicating with the outside of said apparatus main body via the sidewall of said combustion chamber, and being provided with a discharging port on one end thereof,
said continuous discharging member comprising a storage portion extending upward from said heating vessel, and a discharging portion extending downward from said storage portion toward the outside of said apparatus main body.

18. A heat-treatment apparatus according to any one of claims 1 to 17, wherein said heating vessel comprises a tubular preheating tower that projects upward from said combustion chamber, and the top end of said preheating tower is openable and closable by said lid,
said preheating tower being shiftable relative to said heating vessel, and sealably connected to said heating vessel at a location that is higher of said heating vessel.

19. A heat-treatment apparatus according to any one of claims 1 to 18, which further comprises an observation tube that makes the outside and inside of said heating vessel communicable, a heat-resistant camera inserted into said observation tube, and a third supplementary gas-supplying means for supplying a gas between said observation tube and said heat-resistant camera.

20. A heat-treatment method using a heat-treatment apparatus comprising a combustion chamber, an apparatus main body provided with said combustion chamber, a combustion burner for supplying a heating gas to said combustion chamber, a flue for discharging a combustion gas generated in said combustion chamber to the outside thereof, and a heating vessel accommodated in said combustion chamber, said heating vessel having a closed bottom and an opening on the top, said opening being openable and closable by a lid, and said heating vessel being provided with a communicating member that is communicably open to an upper portion of said combustion chamber when said lid is closed,
said method comprising the steps of:
storing waste metals containing flammable waste in said heating vessel; and
melting said waste metals by heating said combustion chamber using said combustion burner while burning unburned gases generated from said flammable waste that are discharged via said communicating member in said combustion chamber.

21. A heat-treatment method according to claim 20, wherein said waste metals contain metal injection needles.

22. A heat-treatment method according to claim 21, wherein said waste metals further contain aluminum components.

23. A heat-treatment method using a heat-treatment apparatus comprising a combustion chamber, an apparatus main body provided with said combustion chamber, a combustion burner for supplying a heating gas to said combustion chamber, a flue for discharging a combustion gas generated in said combustion chamber to the outside thereof, and a heating vessel accommodated in said combustion chamber, said heating vessel having a closed bottom and an opening on the top, said opening being openable and closable by a lid, and said heating vessel being provided with a communicating member that is communicably open to an upper portion of said combustion chamber when said lid is closed,
said method comprising the steps of:
storing waste metals containing flammable waste in said heating vessel; and
heating said heating vessel by heating said combustion chamber using said combustion burner in such a manner that said waste metals will not be melted while burning unburned gases generated from said flammable waste that are discharged via said communicating member in said combustion chamber.

24. A heat-treatment method using a heat-treatment apparatus comprising a combustion chamber, an apparatus main body provided with said combustion chamber, a combustion burner for supplying a heating gas to said combustion chamber, a flue for discharging a combustion gas generated in said combustion chamber to the outside thereof, a heating vessel accommodated in said combustion chamber, and a first supplementary gas-supplying means, said heating vessel having a closed bottom and an opening on the top, said opening being openable and closable by a lid, and said heating vessel being provided with a communicating member that is communicably open to an upper portion of said combustion chamber when said lid is closed,
said method comprising the steps of:
storing waste metals containing flammable waste in said heating vessel; and
burning said flammable waste in said heating vessel by heating said combustion chamber using said combustion burner while supplying a combustion-enhancing gas from said first supplementary gas-supplying means while burning unburned gases generated from said flammable waste that are discharged via said communicating member in said combustion chamber.

25. A heat-treatment method using a heat-treatment apparatus comprising a combustion chamber, an apparatus main body provided with said combustion chamber, a combustion burner for supplying a heating gas to said combustion chamber, a flue for discharging a combustion gas generated in said combustion chamber to the outside, a heating vessel accommodated in said combustion chamber, and a first supplementary gas-supplying means, said heating vessel having a closed bottom and an opening on the top, said opening being opened and closed by a lid, and said heating vessel being provided with a communicating member that is communicably open to an upper portion of said combustion chamber when said lid is closed,
said method comprising the steps of:
storing waste metals containing flammable waste in said heating vessel;
melting said waste metals by heating said combustion chamber using said combustion burner while burning unburned gases generated from said flammable waste discharged via said communicating member in said combustion chamber; and
supplying an inert gas from said first supplementary gas-supplying means after starting to melt said waste metals.
